# EUROPÄISCHE PATENTSCHRIFT

(11) **EP 2 982 914 B1**
(45) Veröffentlichungstag und Bekanntmachung des Hinweises auf die Patenterteilung: **26.06.2019**
(21) Anmeldenummer: 14179744.9
(22) Anmeldetag: 04.08.2014
(51) Int. Cl.: F24S 10/70, F24S 20/66, F24S 70/16

(54) **Fassadenplatte**
Façade panel
Panneau de façade

(43) Veröffentlichungstag der Anmeldung: 10.02.2016
(73) Patentinhaber: RMG - Rieder Management Ges.m.b.H., 5751 Maishofen (AT)
(72) Erfinder: Rieder, Wolfgang, 5751 Maishofen (AT)
(74) Vertreter: Schwarz & Partner Patentanwälte OG

(56) Entgegenhaltungen:
- EP-A2- 2 362 156
- DE-A1- 10 000 741
- DE-A1- 10 000 742
- DE-A1-102005 034 970
- DE-A1-102006 053 573
- DE-A1-102007 052 407
- DE-U1- 29 812 451

## Beschreibung

Die vorliegende Erfindung betrifft eine Fassadenplatte, mit einer Sichtseite und einer der Sichtseite gegenüberliegenden Rückseite, wobei die Rückseite zumindest einen Befestigungsabschnitt aufweist, wobei die Fassadenplatte einen betonierten Bereich aufweist, wobei eine Kapillarrohrmatte vorgesehen ist, die in den betonierten Bereich derart eingebracht ist, dass die Kapillarrohrmatte zumindest auf der Sichtseite vom betonierten Bereich vollständig verdeckt ist. Weiters betrifft die Erfindung eine Anordnung umfassend eine solche Fassadenplatte.

Fassadenplatten der eingangs genannten Gattung offenbart zum Beispiel DE 100 00 741 A1 und sie werden z.B. zur Gestaltung von Fassaden an Gebäuden eingesetzt. In jüngerer Zeit werden solche Fassadenplatten nicht mehr vollflächig an Gebäuden verankert, sondern mit Distanzelementen auf Abstand befestigt, um eine sogenannten hinterlüftete Fassade zu gestalten. Der Luftraum zwischen Gebäude und Fassadenplatte dient in solchen Fällen als Wärmeisolationsschicht.

Nachteilig an derartigen Anordnungen und Fassadenplatten ist der Umstand, dass eine ideale Temperatursteuerung innerhalb des Gebäudes nur schwer möglich ist.

Aufgabe der vorliegenden Erfindung ist es daher eine Fassadenplatte sowie eine Anordnung der eingangs genannten Gattung bereit zu stellen, mit der eine Temperatursteuerung in einem Gebäude möglich ist.

Gelöst wird dieser Aufgabe einerseits durch eine Fassadenplatte, mit einer Sichtseite und einer der Sichtseite gegenüberliegenden Rückseite, wobei die Rückseite zumindest einen Befestigungsabschnitt aufweist, wobei die Fassadenplatte einen betonierten Bereich aufweist, wobei eine Kapillarrohrmatte vorgesehen ist, die in den betonierten Bereich derart eingebracht ist, dass die Kapillarrohrmatte zumindest auf der Sichtseite vom betonierten Bereich vollständig verdeckt ist, welche dadurch gekennzeichnet ist, dass der betonierte Bereich eine erste Schicht bildet und dass eine zweite Betonschicht vorgesehen ist, welche näher an der Sichtseite angeordnet ist als die erste Schicht, wobei die Kapillarrohrmatte in der ersten Schicht eingebettet ist.

Andererseits wird die Aufgabe gelöst durch eine Anordnung umfassend zumindest eine solche Fassadenplatte, welche über den Befestigungsabschnitt mit einem Befestigungsmittel an einem Gebäude mit Abstand befestigt ist.

Mit einer solchen Fassadenplatte ist es möglich, durch ein in die Kapillarrohrmatte eingebrachtes Wärmetransportfluid, im einfachsten Fall Wasser, gegebenenfalls mit Frostschutzmittel, an der Fassadenplatte entstehende Wärme, insbesondere durch Sonnenbestrahlung, abzuführen und in einen Wärmespeicher transportieren. Als Wärmespeicher kann zum Beispiel ein Warmwasserspeicher dienen.

Analog kann bei sehr niedrigen Außentemperaturen im Winter Wärme von einem Wärmereservoir an die Fassadenplatte geleitet werden, um so die Temperatur an der Fassade anzuheben und damit das Raumklima im Gebäude zu verbessern. Auf diese Weise kann der Taupunkt in der Gebäudehülle verschoben werden, was sich positiv auf das Raumklima und die Bausubstanz auswirkt. Das Wärmereservoir kann z.B. eine Wärmepumpe aufweisen, um Umweltwärme (Geothermie, Luftwärme etc.) nutzen zu können.

Eine solche Fassadenplatte kann z.B. als Teil einer Klimaanlage, einer Heizeinrichtung oder Kühleinrichtung verwendet werden, um das Raumklima zu steuern. Die Fassadenplatte kann z.B. Teil einer Wandheizung sein. Auch besteht die Möglichkeit, dass die Fassadenplatte als Kühlfläche oder Absorber-Wärmeableitung eingesetzt wird um z.B. Wärme aus Serverräumen abzuführen.

Das Wärmereservoir kann z.B. aber auch mit Fluidableitungen des Gebäudes verbunden sein, um Abwärme des Gebäudes zu nutzen. Fluidableitungen können z.B. Abwasserleitungen oder Wärmeauslässe von Heizeinrichtungen, Küchen etc. sein.

Unter einer Kapillarrohrmatte versteht man einen - meist flexiblen - plattenförmigen Körper, der zumindest ein (bevorzugt mehrere) Röhrchen aufweist. Der Innendurchmesser der Röhrchen ist dabei derart, dass eine Flüssigkeit mit entsprechender Oberflächenbenetzung allein durch Kapillarwirkung in das Röhrchen vollständig eindringt. Die Kapillarrohrmatte weist meist mehrere Kapillaren auf, welche einen Durchmesser von 0,5 mm bis 4.0 mm, vorzugsweise von 2.5 bis 3.0 mm aufweisen.

Das Einbringen der Kapillarrohrmatte in den betonierten Bereicht hat sich fertigungstechnisch als vorteilhaft erwiesen.

Um ein Wärmetransportfluid in die Kapillarrohrmatte einbringen zu können, ist bevorzugt vorgesehen, dass die Kapillarrohrmatte einen Einlass und einen Auslass aufweist, wobei der Einlass in ein Zuleitungsrohr mündet und der Auslass in ein Ableitungsrohr mündet, wobei das Zuleitungsrohr im betonierten Bereich eingebracht ist und das Ableitungsrohr in den betonierten Bereich eingebracht ist.

Die Kapillarrohrmatte kann wie an sich bekannt aufgebaut sein. Beispielsweise kann sie Polypropylen aufweisen oder daraus bestehen. Der Abstand der Kapillare untereinander beträgt bevorzugt zwischen 10 und 30 mm, vorzugsweise 10, 20 oder 30 mm. Damit ist ein idealer Wärmetransport möglich. Der Randabstand der Kapillaren beträgt ca. 60-100 mm (Abstand der Kapillarrohrmatte zum Rand des Paneels)
Es ist vorgesehen, dass der betonierte Bereich eine erste Schicht bildet und dass eine zweite Betonschicht vorgesehen ist, welche näher an der Sichtseite angeordnet ist als die erste Schicht, wobei die Kapillarrohrmatte in der ersten Schicht eingebettet ist. Diese Ausführungsvariante gewährleistet einen besonders homogenen Wärmetransport in der Fassadenplatte. Bevorzugt ist die Kapillarrohrmatte vollständig in der ersten Schicht eingebettet.

Die Kapillarrohrmatte weist bevorzugt eine Länge von 880 bis 3480 mm und eine Breite von 300 bis 1080 mm auf. Das Kapillarrohr hat bevorzugt einen Außendurchmesser von 4,3 mm, das ovale Stammrohr ist 12 mm dick.

Die Fassadenplatte weist bevorzugt eine Länge von 1000 bis 3600 mm und eine Breite von 500 bis 1200 mm mm auf.

Die Dicke der Fassadenplatte beträgt bevorzugt von 18 bis 40 mm, vorzugsweise etwa 23 mm.

Bei einem zweischichtigen Aufbau beträgt die Dicke der erste Schicht bevorzugt von 8 bis 13 mm und die zweite Schicht bevorzugt von 10 bis 32 mm.

Weiters kann vorgesehen sein, dass die Anordnung eine Wärmetauscheinrichtung aus den oben genannten Gründen aufweist.

Weitere Vorteile und Details der Erfindung werden anhand der Figuren und Figurenbeschreibungen erläutert.
- Fig. 1a bis 1c: zeigt drei Ansichten eine erfindungsgemäßen Fassadenplatte.
- Fig. 2a bis 2c: zeigt drei Detailansichten der Fig. 1a, 1b und 1c.
- Fig. 3: zeigt eine Anordnung aus Fassadenplatte mit Gebäude.

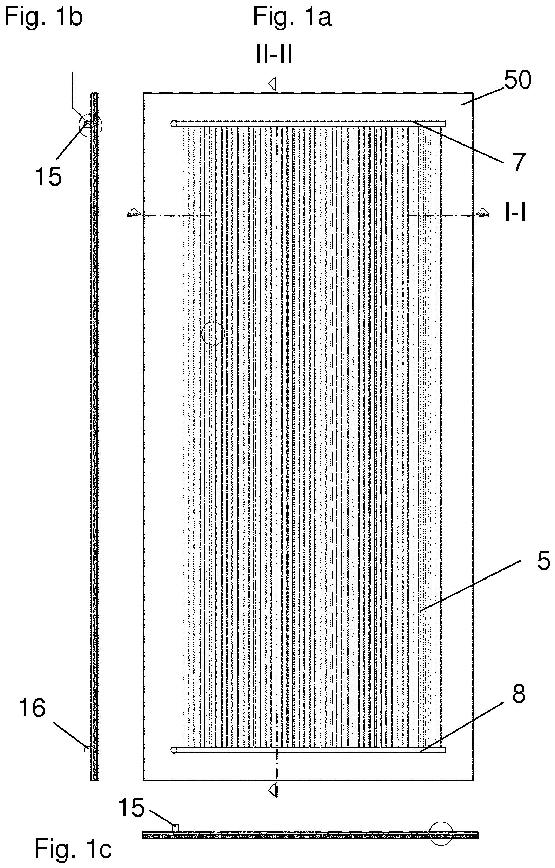

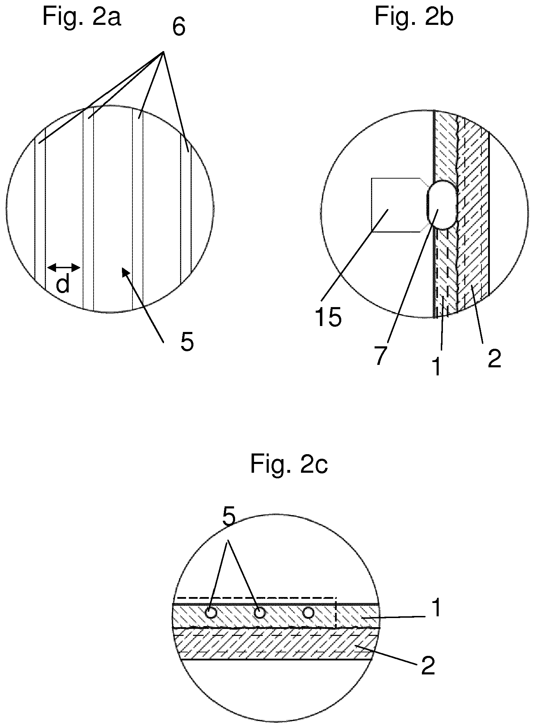

In den Fig. la bis 2c ist eine Fassadenplatte 50 gemäß der Erfindung gezeigt. Fig. la zeigt schematisch die Fassadenplatte 50 mit Kapillarrohrmatte 5, eingebettet in eine Betonschicht 1. Die Darstellung in Fig. 1a ist rein schematisch und zeigt im Hintergrund eine zweite Schicht 2, die an der Rückseite der Blattebene die Sichtseite bildet. Die erste Schicht 1, in der die Kapillarrohrmatte 5 eingebettet ist, wurde in Fig. 1a aus Übersichtlichkeitsgründen nicht dargestellt. Fig. 1b zeigt einen Schnitt durch die Fassadenplatte 50 entlang II-II, Fig. 1c zeigt einen Schnitt durch die Fassadenplatte 50 entlang I-I von Fig. la. Fig. 2a zeigt den vergrößerten Ausschnitt des mit einem Kreis gekennzeichneten Bereichs von Fig. 1a. Fig. 2b zeigt eine Vergrößerung des mit einem Kreis gekennzeichneten Bereichs von Fig. 1b. Schließlich zeigt Fig. 2b den mit einem Kreis gekennzeichneten Bereich von Fig. 1b.

Der strukturelle Aufbau der Fassadenplatte 50 ist in Fig. 1c und 2c am deutlichsten dargestellt. Erkennbar ist der zweischichtige Aufbau, wobei der betonierte Bereich eine erste Schicht 1 bildet und eine zweite Schicht 2 vorgesehen ist. Die zweite Schicht 2 ist näher an der Sichtseite 3 angeordnet während die erste Schicht 1 näher an der Rückseite 4 angeordnet ist. Die Kapillarrohrmatte 5 mit einzelnen Kapillaren 6 ist in der ersten Schicht 1 eingebettet. Die Kapillaren 6 weisen einen seitlichen Abstand d auf. Die Kapillaren 6 sind an einer Seite mit einer Zuleitung 7 und an der anderen Seite mit einer Ableitung 8 verbunden. Ableitung 8 (Fig. 2c) und Zuleitung 7 können an eine Klima-, Heiz- oder sonstige Anlage angeschlossen werden. Hierfür verfügen Zuleitung 7 und Ableitung 8 über Anschlüsse 15, 16, die einen Einlass und Auslass bilden auch zur Befestigung der Fassadenplatte 50 dienen können und daher (zumindest teilweise) als Befestigungsabschnitt dienen können.

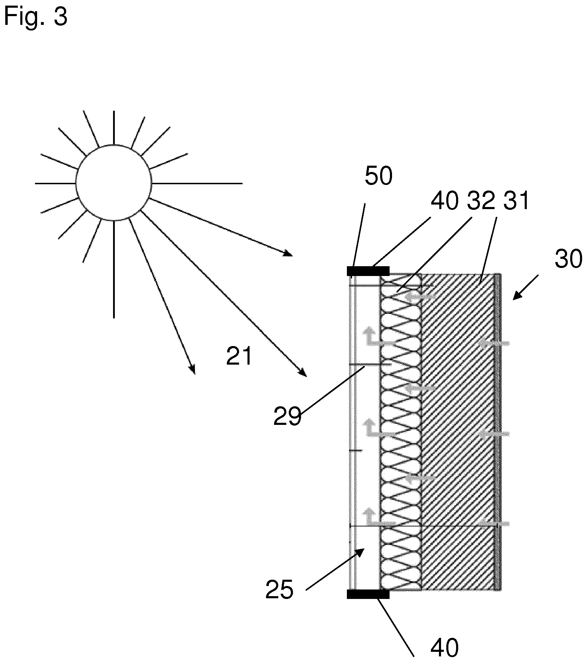

Fig. 3 zeigt eine Fassadenplatte, welche Sonnenlichtbestrahlung 21 ausgesetzt ist. Durch Distanzelemente 29 ist die Fassadenplatte 50 vom Gebäude 30 mit Abstand angeordnet. Das Gebäude 30 weist einen Massivabschnitt 31 und einen Dämmbereich 32 auf. Zwischen Dämmbereich 31 und Fassadenplatte 50 befindet sich Luft, sodass die Fassade hinterlüftet ist. Durch Abschließelemente 40 kann die Luftströmung im hinterlüfteten Bereich 25 verändert werden.

## Patentansprüche

1. Fassadenplatte (50), mit einer Sichtseite und einer der Sichtseite (3) gegenüberliegenden Rückseite, wobei die Rückseite zumindest einen Befestigungsabschnitt (15, 16) aufweist, wobei die Fassadenplatte (50) einen betonierten Bereich aufweist, wobei eine Kapillarrohrmatte (5) vorgesehen ist, die in den betonierten Bereich derart eingebracht ist, dass die Kapillarrohrmatte (50) zumindest auf der Sichtseite (3) vom betonierten Bereich vollständig verdeckt ist, **dadurch gekennzeichnet, dass** der betonierte Bereich eine erste Schicht (1) bildet und dass eine zweite Betonschicht (2) vorgesehen ist, welche näher an der Sichtseite (3) angeordnet ist als die erste Schicht (1), wobei die Kapillarrohrmatte (5) in der ersten Schicht (1) eingebettet ist.

2. Fassadenplatte nach Anspruch 1, **dadurch gekennzeichnet, dass** die Kapillarrohrmatte (5) einen Einlass (15) und einen Auslass (16) aufweist, wobei der Einlass (15) in eine Zuleitung (7) mündet und der Auslass (16) in eine Ableitung (8) mündet, wobei die Zuleitung(7) im betonierten Bereich eingebracht ist und die Ableitung (8) in den betonierten Bereich eingebracht ist.

3. Fassadenplatte nach Anspruch 1 oder Anspruch 2, **dadurch gekennzeichnet, dass** die Kapillarrohrmatte (5) Polypropylen aufweist.

4. Fassadenplatte nach einem der Ansprüche 1 bis 3, **dadurch gekennzeichnet, dass** die Kapillarrohrmatte (5) mehrere Kapillaren (6) aufweist, welche einen Durchmesser von 00,5 mm bis 4.0 mm aufweisen.

5. Fassadenplatte nach Anspruch 4, **dadurch gekennzeichnet, dass** die Kapillaren (6) einen seitlichen Abstand (d) von 10 bis 30 mm aufweisen.

6. Anordnung, umfassend zumindest eine Fassadenplatte nach einem der Ansprüche 1 bis 5, welche über den Befestigungsabschnitt (15, 16) mit einem Befestigungsmittel an einem Gebäude mit Abstand befestigt ist.

7. Anordnung nach Anspruch 6, weiters umfassend eine Wärmetauscheinrichtung.

8. Anordnung nach Anspruch 6 oder Anspruch 7, weiters umfassend ein Wärmereservoir und/oder einen Wärmespeicher.

## Claims

1. A façade panel (50) having a visible side and a rear side opposite to the visible side (3), wherein the rear side has at least one fastening portion (15, 16), wherein the façade panel (50) has a concrete covered area, wherein there is provided a capillary tube mat (5), which is incorporated into the concrete covered area such that the capillary tube mat (50) is completely concealed by the concrete covered area at least on the visible side (3), **characterized in that** the concrete covered area forms a first layer (1) and that there is provided a second layer (2), which is arranged closer to the visible side (3) than the first layer (1), wherein the capillary tube mat (5) is embedded in the first layer (1).

2. A façade panel according to claim 1, **characterized in that** the capillary tube mat (5) has an inlet (15) and an outlet (16), wherein the inlet (15) opens into a feed line (7) and the outlet (16) opens into a discharge line (8), wherein the feed line (7) is incorporated in the concrete covered area and the discharge line (8) is incorporated in the concrete covered area.

3. A façade panel according to claim 1 or claim 2, **characterized in that** the capillary tube mat (5) comprises polypropylene.

4. A façade panel according to any of claims 1 to 3, **characterized in that** the capillary tube mat (5) has a plurality of capillaries (6), which have a diameter from 00.5 mm to 4.0 mm.

5. A façade panel according to claim 4, **characterized in that** the capillaries (6) have a lateral distance (d) of 10 to 30 mm.

6. An assembly, including at least one façade panel according to any of claims 1 to 5, which is fastened to a building at a distance via the fastening portion (15, 16) using a mounting means.

7. An assembly according to claim 6, further including a heat exchanging device.

8. An assembly according to claim 6 or claim 7, further including a heat reservoir and/or a heat storage device.

## Revendications

1. Panneau de façade (50), avec un côté visible et un côté arrière opposé au côté visible (3), dans lequel le côté arrière présente au moins une partie de fixation (15, 16), dans lequel le panneau de façade (50) présente une zone bétonnée, dans lequel il est prévu un tapis de tubes capillaires (5), qui est incorporé dans la zone bétonnée de telle manière que le tapis de tubes capillaires (50) soit entièrement masqué par la zone bétonnée au moins sur le côté visible (3), **caractérisé en ce que** la zone bétonnée forme une première couche (1) et **en ce qu'**il est prévu une seconde couche de béton (2), qui est disposée plus près du côté visible (3) que la première couche (1), dans lequel le tapis de tubes capillaires (5) est noyé dans la première couche (1).

2. Panneau de façade selon la revendication 1, **caractérisé en ce que** le tapis de tubes capillaires (5) présente une entrée (15) et une sortie (16), dans lequel l'entrée (15) débouche dans une conduite d'alimentation (7) et la sortie (16) débouche dans une conduite d'évacuation (8), dans lequel la conduite d'alimentation (7) est installée dans la zone bétonnée et la conduite d'évacuation (8) est installée dans la zone bétonnée.

3. Panneau de façade selon la revendication 1 ou la revendication 2, **caractérisé en ce que** le tapis de tubes capillaires (5) présente du polypropylène.

4. Panneau de façade selon l'une quelconque des revendications 1 à 3, **caractérisé en ce que** le tapis de tubes capillaires (5) présente plusieurs capillaires (6), qui présentent un diamètre de 00,5 mm à 4,0 mm.

5. Panneau de façade selon la revendication 4, **caractérisé en ce que** les capillaires (6) présentent un écartement latéral (d) de 10 à 30 mm.

6. Agencement, comprenant au moins un panneau de façade selon l'une quelconque des revendications 1 à 5, qui est fixé à distance à un bâtiment avec un moyen de fixation au moyen de la partie de fixation (15, 16).

7. Agencement selon la revendication 6, comprenant en outre un dispositif d'échange de chaleur.

8. Agencement selon la revendication 6 ou la revendication 7, comprenant en outre un réservoir de chaleur et/ou un accumulateur de chaleur.
